# EUROPÄISCHE PATENTANMELDUNG

(11) **EP 2 169 409 A1**
(43) Veröffentlichungstag der Anmeldung: **31.03.2010**
(21) Anmeldenummer: 08017184.6
(22) Anmeldetag: 30.09.2008
(51) Int. Cl.: G01Q 70/14, G01Q 70/16

(54) **SPM-Sensor und Herstellungsverfahren**

(71) Anmelder: NanoWorld AG, 2007 Neuchâtel (CH)
(72) Erfinder: Aeschimann, Laure, 3005 Bern (CH)
(74) Vertreter: Klocke, Peter

(57) **Zusammenfassung**

SPM-Sensor mit einem Halteelement, einem Cantilever und einer aus der Oberfläche des Cantilevers herausragenden Sensorspitze am freien Ende, wobei das Halteelement aus monokristallinem Silizium und mindestens der Cantilever aus thermisch gewachsenem Siliziumdioxid hergestellt ist. Zur Herstellung des SPM-Sensors wird auf einem monokristallinem Siliziumsubstrat als Startmaterial mittels mikromechanischer Techniken Halteelement, Cantilever und Sensorspitze hergestellt, wobei wenigstens der Cantilever aus thermisch aufgewachsenem Siliziumdioxid und das Halteelement aus dem Siliziumsubstrat hergestellt werden. Ein derart hergestellter SPM-Sensor mit einem Cantilever aus thermisch oxidiertem Silizium ist kostengünstig herzustellen und erlaubt eine Fertigung beliebiger Geometrien innerhalb wesentlich engerer Fertigungstoleranzen verglichen mit bekannten Siliziumsensoren über den gesamten Wafer. Er ist auch geeignet bisherige Siliziumnitritsensoren zu ersetzen (Figur 7).

## Beschreibung

Vorliegende Erfindung betrifft einen SPM-Sensor mit einem Halteelement, einem Cantilever und einer aus der Oberfläche des Cantilevers herausragenden Sensorspitze am freien Ende. Die Erfindung betrifft außerdem ein Verfahren zur Herstellung eines derartigen SPM-Sensors.

Raster-Kraft-Mikroskope (Scanning Probe Microscopy (SPMs)) sind allgemein bekannt und werden in der Praxis benutzt, um mit feinen Sensoren in atomarer Auflösung die Oberfläche von Proben abzutasten. Dabei werden Sensoren eingesetzt, die aus einem Mikrobiegebalken, im nachfolgenden Cantilever genannt, bestehen, der an seinem einen Ende ein Halteelement und am anderen Ende eine Sensorspitze aufweist, mit der die Probe abgetastet wird.

Zur Herstellung dieser SPM-Sensoren gibt es eine Vielzahl von mikromechanischen Verfahren, die auf die Geometrie des herzustellenden Sensors, die durch den Anwendungsfall bedingt ist, abgestimmt sind. Üblicherweise werden SPM-Sensoren aus SOI- (Silicon On Insulator) Material, aus niedergeschlagenen Material, wie beispielsweise Siliziumnitrit, oder monokristallinem Silizium hergestellt. Trotz der großen Vorteile bei der Verwendung von monokristallinem Silizium als Startmaterial zur Herstellung von SPM-Sensoren, ist der größte Nachteil darin zu sehen, dass die geometrischen Eigenschaften des Cantilevers schlecht gesteuert und kontrolliert werden können. Insbesondere die Ungleichförmigkeit der endgültigen Cantileverdicke über einem Wafer ist schlecht. So kann beispielsweise bei einem im Handel erhältlichen SPM-Sensor die spezifizierte Cantileverdicke von 2 µm in einem Bereich von 1,5 bis 2,5 µm liegen. Das bedeutet, dass die mechanischen Eigenschaften diese Sensoren in einem weiten Bereich, beispielsweise die Federkonstante von 0,07 bis 0,4 N/m, und die Resonanzfrequenz in einem Bereich von 21 bis 78 kHz liegen. Für bestimmte Einsatzgebiete des SPM-Sensors ist es jedoch äußerst wichtig, dass die Toleranzen enger gehalten werden.

Der vorliegenden Erfindung liegt daher die Aufgabe zugrunde, einen neuen SPM-Sensor sowie ein Verfahren zur Herstellung eines SPM-Sensors vorzuschlagen, mit dem die Fertigungstoleranzen über einen Wafer, insbesondere die Gleichförmigkeit der Cantileverdicke besser gesteuert werden können und somit die Fertigungstoleranz geringer ist, als bei bekannten SPM-Sensoren und deren Herstellungsverfahren.

Diese Aufgabe wird erfindungsgemäß durch einen SPM-Sensor mit den Merkmalen des Anspruchs 1 sowie für ein Verfahren zur Herstellung eines SPM-Sensors mit den Merkmalen des nebengeordneten Verfahrensanspruchs gelöst. Die Aufgabe wird außerdem durch die neuartige Verwendung von thermisch aufgewachsenem Siliziumdioxid gelöst.

Gemäß der Erfindung wird bei dem SPM-Sensor von Cantilever und Sensorspitze zumindest der Cantilever aus thermisch gewachsenen Siliziumdioxid hergestellt. In einem solchen Fall wird die Sensorspitze durch andere bekannte Verfahren, beispielsweise durch Elektronenstrahlverfahren, Oxidation oder Vorstrukturierung an den Cantilever angebracht. Diese Maßnahme ist jedoch insbesondere dann erforderlich, wenn kurze Cantilever mit einer hohen Spitze hergestellt werden müssen. Bei den meisten anderen Anwendungen sind Cantilever und Sensorspitze aus thermisch gewachsenen Siliziumdioxid hergestellt. Das Halteelement kann vorzugsweise aus monokristallinem Silizium und damit der SPM-Sensor einstückig hergestellt sein. Es ist jedoch auch möglich, den Cantilever durch ein Bond-Verfahren auf ein Halteelement (Haltechip), beispielsweise Pyrex-Chip, aufzubringen.

Zum Aufbringen von thermisch gewachsenem Siliziumdioxid ist es erforderlich, einen Siliziumwafer in einem Dampfstrom oder in einer nassen oder trockenen Sauerstoff/Stickstoff-Mischung bei erhöhten Temperaturen (600 bis 1250 °C) zu heizen. Das Silizium oxidiert leicht bei Raumtemperatur und bildet eine dünne natürliche Oxidschicht, ungefähr mit einer Dicke von 2 nm. Die hohe Temperatur bewirkt die Diffusion von Oxidanten durch die Oberflächenoxidschicht an die Siliziumoberfläche, um an dieser Schnittstelle schnell dicke Oxide zu bilden. Die thermische Oxidation, die den Verbrauch der Oberfläche bewirkt, resultiert in eine hervorragende Adhäsion sowie guten elektrischen und mechanischen Eigenschaften. Darüber hinaus ist thermisches Siliziumoxid dichter und ätzt langsamer als Siliziumoxide, die durch Abscheidung, wie z.B. CVD (Chemical Vapor Deposition) erzeugt wurden.

Übliche Oxiddicken von einigen Zehntel eines µm werden üblicherweise mit thermischen Oxiden hergestellt, wobei 1 bis 2 µm die obere Grenze für konventionelle thermische Oxide darstellt. Durch langen Oxidationszeiten können mittels kürzlich entwickelten Verfahren dicke thermische Oxidschichten hergestellt werden, wobei Schichten bis zu 15 µm Dicke erreicht werden und im Handel erhältlich sind. Üblicherweise wird jedoch Siliziumdioxid, das durch thermische Oxidation auf Silizium aufgebracht wird, als gemeinsame Isolierschicht, als Maske oder als Opferschichtmaterial verwendet. Im vorliegenden Fall wird eine dicke Siliziumdioxidschicht, die durch thermische Oxidation aufgebracht wird, als Strukturmaterial verwendet.

Mittels isotropischem Nassätzen von Siliziumdioxid können eine Vielzahl von Cantilever- und Sensorspitzengeometrien leicht realisiert werden. Üblicherweise werden rechteckig geformte Cantilever verwendet, jedoch ist der neue SPM-Sensor nicht auf diese spezielle Form beschränkt. Zusätzlich können verschiedene Arten von Sensorspitzen auf dem Cantilever aufgebracht werden. Beispielsweise können Siliziumdioxidspitzen mit einer symmetrischen runden Form und schmalem Spitzenradius monolithisch auf den Cantilever integriert werden. Darüber hinaus können Silizium und Siliziumnitritspitzen oder Spitzen aus verschiedenen Materialien auf solche Cantilever aufgebracht werden.

Die geometrischen Eigenschaften kann innerhalb sehr geringer Toleranzen über den Wafer gesteuert und kontrolliert werden, wobei insbesondere die Cantileverdicke von Bedeutung ist. Infolge dessen liegt die Toleranz der mechanischen Eigenschaften in einem engeren Bereich als bei bekannten SPM-Sensoren. Hauptgrund für die besseren Toleranzen ist die exzellente Homogenität des Oxids, die mit einem Abscheideverfahren nicht erreicht wird. Darüber hinaus ist aber auch die Absolutdicke sehr genau einstellbar, weil der Oxidationsprozess durch die zunehmende Diffusionslänge immer langsamer wird und die Dicke aufgrund der exakt bekannten Materialparameter und guter Messtechnik sehr genau bestimmt werden kann.

Der SPM-Sensor stellt auch eine Alternative zu bestehenden Siliziumnitritsensoren dar. Ihre Vorteile sind die gute Steuerung und Kontrolle der Cantileverdicke und geringe Federkonstanten. Die Cantileverdicke des erfindungsgemäßen SPM-Sensors kann genauso gesteuert und kontrolliert werden wie bei Siliziumnitritsensoren. Sogar mit sehr geringer Dicke können die Cantilever nahezu stressfrei, d.h. ohne Verbiegung, hergestellt werden, was bei Siliziumnitritsensoren nicht der Fall ist. Es ist bekannt, dass die Spannung der Nitritschicht, die zu einer ungewünschten Cantileverbiegung führt, die Hauptschwierigkeit bei der Herstellung von Siliziumnitritsensoren darstellt. Außerdem ist der notwendige Bondprozess schwierig zu kontrollieren. Der Herstellungsprozess des erfindungsgemäßen SPM-Sensors ist einfach und reproduzierbarer und damit aufgrund des höheren Ausstoßes auch kostengünstiger im Vergleich zur Herstellung von Siliziumnitritsensoren.

Gemäß dem Verfahren wird auf ein monokristallines Siliziumsubstrat als Startmaterial mittels mikromechanischer Techniken Halteelement, Cantilever und Sensorspitze hergestellt, wobei wenigstens der Cantilever aus thermisch aufgewachsenem Siliziumdioxid hergestellt werden. Vorzugsweise wird auf dem Siliziumsubstrat eine Schicht aus thermisch oxidierendem Siliziumdioxid aufgebracht und aus dieser Schicht der Cantilever bzw. der Cantilever und die Spitze hergestellt, wobei hier die üblichen dem Fachmann bekannten mikromechanischen Schritte wie Maskierung, photolithografische Strukturierung und anschließendes Ätzen von der Vorder- bzw. Rückseite des Wafers eingesetzt werden. Auch andere mikromechanische Techniken, die zum gleichen Ergebnis führen, können eingesetzt werden. Das Siliziumsubstrat kann vorstrukturiert oder unstrukturiert sein. Besonders vorteilhaft ist es, wenn Cantilever und Sensorspitze aus thermisch aufgewachsenem Siliziumdioxid und vorzugsweise auch das Halteelement aus dem Siliziumsubstrat hergestellt werden. Dies vereinfacht die Prozessschritte. Dabei kann die Spitze verschiedene geometrische Formen annehmen.

Mit der Erfindung wird eine neuartige Verwendung von thermisch gewachsenem Siliziumdioxid als Strukturmaterial zur Herstellung von SPM-Sensoren mit einem Halteelement aus monokristallinem Silizium oder einem anderen Material und zumindest einem Cantilever, vorzugsweise auch einer Sensorspitze, aus thermisch aufgewachsenem Silizium vorgeschlagen.

Durch den erfindungsgemäßen SPM-Sensor mit zumindest dem Cantilevermaterial aus aufgewachsenem Silizium ergeben sich zusammenfassend folgende Vorteile und Anwendungsmöglichkeiten:
Kontrolle der geometrischen Eigenschaften des Cantilevers in einem schmalen Toleranzband über dem Wafer.
Der Siliziumdioxidcantilever ist auf einem Standardsiliziumhalteelement integriert, dessen Dimensionen auch reproduzierbar gesteuert werden können. Wenn erforderlich, können Rillen zum Ausrichten auf der Rückseite des Halteelements aufgebracht werden.
Aufgrund von isotropischem Nassätzen des Siliziumdioxids können eine Vielzahl von Cantilevergeometrien leicht realisiert werden.
Auf dem Cantilever können verschiedene Spitzen integriert werden. Beispielsweise können Siliziumdioxidspitzen mit einer symmetrischen runden Form und einem kleinen Spitzenradius (< 10 nm) monolithisch auf den Cantilever integriert werden.
Der SPM-Sensor stellt auch für biologische Anwendungen eine interessante Alternative zu Siliziumnitritsensoren dar. Die Steifigkeit und Frequenz der SPM-Sensoren kann in einem für Messungen in Flüssigkeiten optimalen Bereich eingestellt werden. Des weiteren ist Siliziumdioxid ein chemisch inertes Material und ein in Form von Quarz-Gefäßen in der Biologie weit verbreitetes Material.
   Der erfindungsgemäße SPM-Sensor mit derartigem Siliziumdioxidcantilever und integrierter Spitze können außerdem vorteilhaft für SNOM (Scanning Near-Field Optical Microscopy) verwendet werden. In diesem Fall muss der SPM-Sensor, insbesondere Cantilever und Spitze mit einer opaken Metallschicht, beispielsweise Aluminium, und einer Öffnung in der Metallschicht am Ende der Spitze versehen werden. Die Integration der SNOM-Spitze in ein mikromechanisches System und der damit verbundenen besseren Abstandskontrolle bei der Messung und die reproduzierbarere Spitzenqualität sind Vorteile gegenüber herkömmlichen SNOM-Sonden, z.B. auf Glasfaser basierenden SNOM-Sonden. Das transparente Vollmaterial der Spitze ist ein weiterer Vorteil gegenüber konventionellen SPM-Sonden. Im Vergleich zu handelsüblichen SNOM-Sensoren und deren Cantilever sind Siliziumdioxidcantilever mit Siliziumdioxidspitzen gemäß der Erfindung eine interessante kostengünstige Alternative.

Weitere Merkmale der Erfindung ergeben sich aus der folgenden Beschreibung der Verfahrensschritte zur Herstellung eines SPM-Sensors mit Cantilever und Spitze aus thermisch gewachsenem Siliziumdioxid in Verbindung mit den Ansprüchen und Zeichnungen- Die einzelnen Merkmale können je für sich oder zu mehreren bei Ausführungsformen der Erfindung verwirklicht sein.

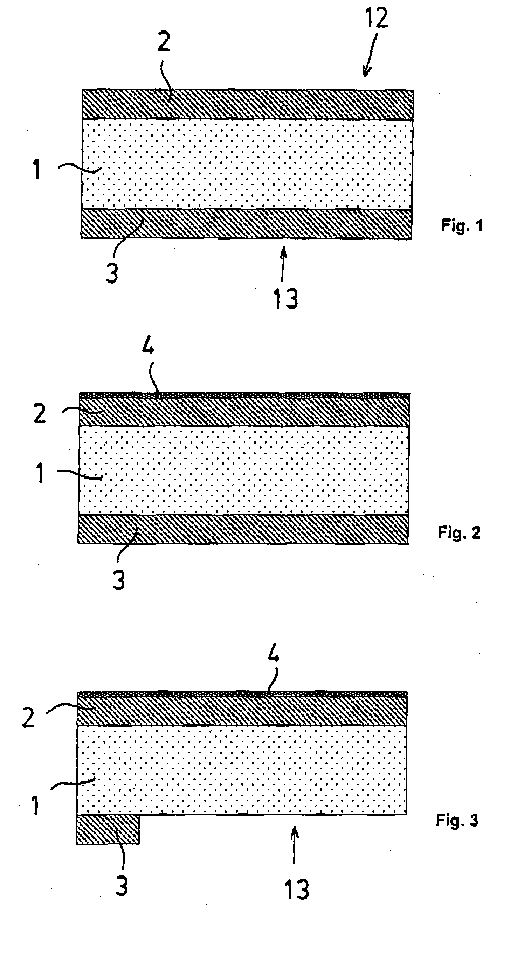

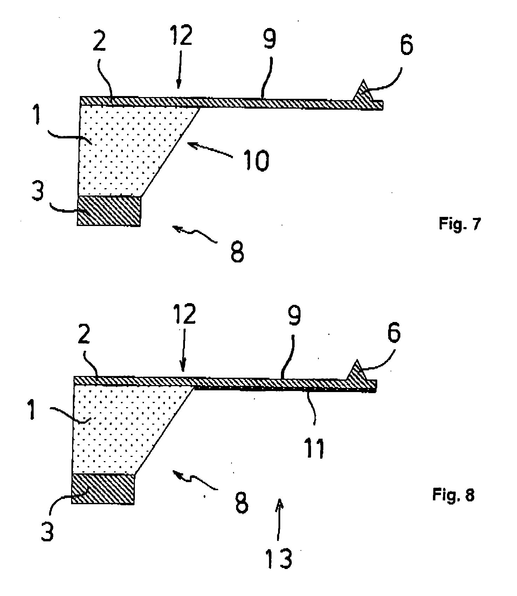

Die Figuren 1 bis 8 zeigen in einer Querschnittsdarstellung die einzelnen Schritte zur Herstellung eines SPM-Sensors mit einem Cantilever und einer Sensorspitze aus thermisch gewachsenem Siliziumdioxid sowie einem Halteelement aus monokristallinem Silizium als Ausführungsbeispiel.

Das Herstellungsverfahren für den erfindungsgemäßen SPM-Sensor zeichnet sich durch kostengünstige Verfahrensschritte, insbesondere nasschemische Ätzschritte aus. Selbstverständlich können alle nasschemische Ätzschritte auch durch Trockenätzschritte realisiert werden, wobei jedoch dann die Herstellung dieser SPM-Sensoren wesentlich verteuert wird.

Figur 1 zeigt als Startmaterial einen monokristallinen Siliziumwafer 1, der thermisch oxidiert wurde um eine dicke Siliziumdioxidschicht 2, 3, beispielsweise von 10 µm Dicke, herzustellen. Das thermisch oxidierte Siliziumsubstrat 1 kann unstrukturiert oder vorstrukturiert sein.

In Figur 2 ist ein Maskenmaterial 4, wie beispielsweise Siliziumnitrit auf die Wafervorderseite 12 aufgebracht. Das Maskenmaterial 4 kann auch auf beide Seiten des Wafers 1 aufgebracht und anschließend entfernt oder auf der Waferrückseite 13 belassen werden. Andere Materialen können Siliziumnitrit, Polysilizium, Metall usw. sein. Alternativ kann auch die Siliziumdioxidschicht 3 vorab von der Waferrückseite 13 entfernt werden. In diesem Fall muss das Maskenmaterial 4 auf beiden Seiten des Wafers 1 aufgebracht werden.

Im dritten Schritt gemäß Figur 3 wurde die Waferrückseite 13 durch Fotolithografie gefolgt durch nasschemisches Ätzen der dicken Siliziumdioxidschicht 3 strukturiert. Sofern das Maskenmaterial 4, das in dem zweiten Schritt gemäß Figur 2 alternativ auf der Waferrückseite 13 verbleibt, muss es vor dem Ätzen der Siliziumdioxidschicht 3 strukturiert werden. Alternativ, wenn die Siliziumdioxidschicht 3 im zweiten Schritt auf der Waferrückseite 13 entfernt wurde, wird nur das Maskierungsmaterial 4 auf der Waferrückseite 13 geätzt.

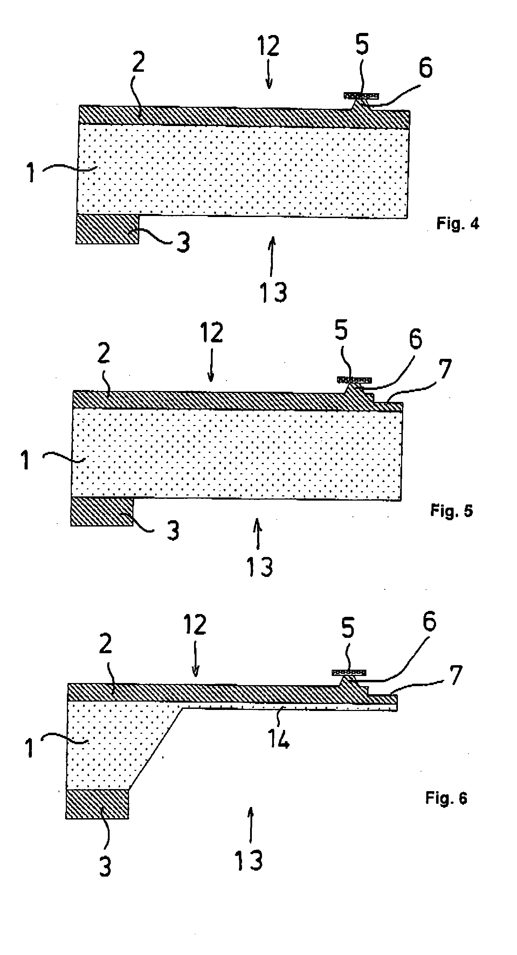

Im vierten Schritt gemäß Figur 4 ist die Wafervorderseite 12 durch Fotolithografie gefolgt durch Trockenätzen und/oder nasschemisches Ätzen des Maskenmaterials 4 strukturiert worden, um eine Maskierung 5 für die Spitze 6 zu erzeugen. Um symmetrische runde Spitzen 6 zu erreichen, ist die Maske 5 für die Spitze 6 scheibenförmig. Verschiedene Spitzenmaskenformen, wie Dreiecke, Quadrate, Fünfecke usw. können hergestellt werden. Durch isotropisches Ätzen der Siliziumdioxidschicht 2 wird die Spitzenmaske 5 unterätzt bis eine scharfe Spitze6 geformt wurde. Abhängig von der Spitzenmaskenform kann die endgültige Spitzenform variieren.

Figur 5 zeigt im fünften Schritt einen dritten fotolithografischen Schritt zur Strukturierung der Siliziumdioxidschicht 2. Der Schritt erlaubt, den Cantilever von der Wafervorderseite 12 zu strukturieren. Die Reihenfolge der in den Figuren 3 bis 5 dargestellten Schritte kann auch geändert sein.

Gemäß Figur 6 wird das Silizium 1 nasschemisch von der Waferrückseite 13 geätzt.

Figur 7 zeigt den fertigen SPM-Sensor 8, der durch aufeinanderfolgende nasschemische Ätzschritte des Siliziums 1 und des Siliziumdioxids 2 erzeugt wird, so dass der Cantilever 9 mit der finalen Spitze 6 und dem Halteelement 10 durch Ätzen hergestellt wird.

Figur 8 schließlich zeigt wie in einem möglichen achten Schritt die der Spitze 6 gegenüberliegende Seite des fertigen SPM-Sensors für die meisten Anwendungsfälle mit einer dünnen Metallschicht 11, beispielsweise Aluminium, im Bereich des Cantilevers 9 beschichtet ist.

In einem Ausführungsbeispiel wurde auf die vorstehend beschriebene Art und Weise ein Siliziumdioxidcantilever 9 mit einer 7 µm hohen Spitze mit einem Spitzenradius von < 10 nm hergestellt. Für eine Cantileverdicke von 3,35 µm wurde die Dickenabweichung durch optische Interferometrie über den Wafer an 32 über den Wafer verteilten Punkten gemessen. Dabei wurde eine Standardabweichung von +/- 30 nm berechnet. Bei einer Cantileverlänge von 450 µm und einer Breite von 80 µm wurden folgende mechanische Eigenschaften und maximale Abweichungen berechnet:
Kraftkonstante C = 0,50 N/m (0,48 N/m-0,52 N/m)
Resonanzfrequenz F = 14,00 kHz (13,85 kHz-14,23 kHz).

Im Vergleich mit handelsüblichen Standardsilizium SPM-Sensoren liegen diese Werte eindeutig innerhalb wesentlich engeren Toleranzen. Solche SPM-Sensoren haben Toleranzen, die mehr als 10x enger sind als bisher. Bei Abbildungstest derartiger SPM-Sensoren konnte eine wesentlich verbesserte Abbildungsfähigkeit und Auflösung (< 100 nm) erreicht werden.

## Patentansprüche

1. SPM-Sensor mit einem Halteelement (10), einem Cantilever (9) und einer aus der Oberfläche des Cantilevers (9) herausragenden Sensorspitze (6) am freien Ende, **dadurch gekennzeichnet, dass** von Cantilever (9) und Sensorspitze (6) mindestens der Cantilever (9) aus thermisch gewachsenem Siliziumdioxid (2) hergestellt ist.

2. SPM-Sensor nach Anspruch 1, **dadurch gekennzeichnet, dass** Cantilever (9) und Sensorspitze (6) aus thermisch gewachsenem Siliziumdioxid (2) hergestellt sind.

3. SPM-Sensor nach Anspruch 1 oder 2, **dadurch gekennzeichnet, dass** das Halteelement (10) aus monokristallinem Silizium (1) hergestellt ist.

4. Verfahren zur Herstellung eines SPM-Sensors (8) mit einem Halteelement (10), einem Cantilever (9) und einer aus der Oberfläche des Cantilevers (9) herausragenden Sensorspitze (6) am freien Ende, **dadurch gekennzeichnet, dass** auf einem monokristallinem Siliziumsubstrat (1) als Startmaterial mittels mikromechanischer Techniken Halteelement (10), Cantilever (9) und Sensorspitze (6) hergestellt werden, wobei wenigstens der Cantilever (9) aus thermisch aufgewachsenem Siliziumdioxid (2).

5. Verfahren nach Anspruch 4, **dadurch gekennzeichnet, dass** Cantilever (9) und Sensorspitze (6) aus thermisch aufgewachsenem Siliziumdioxid (2) hergestellt werden.

6. Verfahren nach Anspruch 4 oder 5, **dadurch gekennzeichnet, dass** das Halteelement (10) aus dem Siliziumsubstrat (1) hergestellt wird.

7. Verfahren nach Anspruch 4 oder 5, **dadurch gekennzeichnet, dass** auf das Siliziumsubstrat (1) eine Schicht (2) aus thermisch oxidiertem Siliziumdioxid aufgebracht wird, aus der mittels mikromechanischer Schritte der Cantilever (9) bzw. der Cantilever (9) und die Sensorspitze (6) hergestellt werden.

8. Verfahren nach Anspruch 7, **dadurch gekennzeichnet, dass** auf die Siliziumdioxidschicht (2), aus der der Cantilever (9) erzeugt werden soll, ein Maskenmaterial (4) aufgebracht wird,
die Waferrückseite (13) durch fotolithografische Strukturierung und nasschemisches Ätzen strukturiert wird,
die Wafervorderseite (12) mit der Siliziumdioxidschicht (2) mehrfach fotolithografisch strukturiert und durch nachfolgende trocken und/oder nasschemische Atzvorgänge der Cantilever (9) und die Spitze (6) geformt werden,
der Cantilever (9) und die Spitze (6) teilweise durch nasschemisches Ätzen von der Rückseite (13) freigelegt werden.

9. Verwendung von thermisch gewachsenem Siliziumdioxid als Strukturmaterial zur Herstellung von zumindest einem Cantilever (9), vorzugsweise auch einer Sensorspitze (6), aus thermisch aufgewachsenem Siliziumdioxid für SPM-Sensoren (8) mit einem Halteelement (10), Cantilever (9) und Sensorspitze (6).
